# EUROPÄISCHE PATENTSCHRIFT

(11) **EP 3 221 691 B1**
(45) Veröffentlichungstag und Bekanntmachung des Hinweises auf die Patenterteilung: **27.01.2021**
(21) Anmeldenummer: 15788085.7
(22) Anmeldetag: 04.11.2015
(51) Int. Cl.: G01N 29/22, G01N 29/24, G01N 29/26

(54) **ZERSTÖRUNGSFREIE WERKSTOFFPRÜFUNG EINES BAUTEILS MITTELS EINES ZWEIDIMENSIONALEN ULTRASCHALLWANDLERARRAYS**
NONDESTRUCTIVE TESTING OF A WORKPIECE BY A TWODIMENSIONAL ULTRASOUND ARRAY
TEST NONDESTRUCTIVE D'UN ECHANTILLON PAR UN RÉSEAU ULTRASONORE BI-DIMENSIONNEL

(30) Priorität: 19.11.2014 DE 102014116925
(43) Veröffentlichungstag der Anmeldung: 27.09.2017
(73) Patentinhaber: Framatome GmbH, 91052 Erlangen (DE)
(72) Erfinder: RITTER, Joachim, 91077 Neunkirchen am Brand (DE); ENGL, Günter, 91052 Erlangen (DE)
(74) Vertreter: Lavoix
(86) Internationale Anmeldenummer: PCT/EP2015/075664
(87) Internationale Veröffentlichungsnummer: WO 2016/078914

(56) Entgegenhaltungen:
- US-A1- 2009 133 501
- WEI YOU ET AL: "Tiltable Ultrasonic Transducers: Concept, Beamforming Methods and Simulation", IEEE SENSORS JOURNAL, IEEE SERVICE CENTER, NEW YORK, NY, US, Bd. 11, Nr. 10, 1. Oktober 2011 (2011-10-01), Seiten 2286-2300, XP011480167, ISSN: 1530-437X, DOI: 10.1109/JSEN.2011.2134846
- MARTINEZ O ET AL: "2D array based on fermat spiral", PHYSICS PROCEDIA, ELSEVIER, AMSTERDAM, NL, Bd. 3, Nr. 1, 1. Januar 2010 (2010-01-01), Seiten 399-406, XP027034355, ISSN: 1875-3892 [gefunden am 2010-01-01]
- TWEEDIE A ET AL: "Aperiodic and deterministic 2D phased array structures for ultrasonic imaging", ULTRASONICS SYMPOSIUM (IUS), 2009 IEEE INTERNATIONAL, IEEE, PISCATAWAY, NJ, USA, 20. September 2009 (2009-09-20), Seiten 406-409, XP031654779, ISBN: 978-1-4244-4389-5 in der Anmeldung erwähnt

## Beschreibung

Die Erfindung betrifft einen Ultraschallprüfkopf zur zerstörungsfreien Werkstoffprüfung eines Bauteils, mit einer zur Ankopplung an das Bauteil ausgebildeten Ultraschallwandleranordnung, die eine Vielzahl von zueinander beabstandeten und in einem zweidimensionalen Array angeordneten Einzelwandlern umfasst. Die Erfindung betrifft ferner ein Verfahren zur zerstörungsfreien Werkstoffprüfung eines Bauteils mit einem derartigen Ultraschallprüfkopf.

Im Bereich der zerstörungsfreien Werkstoffprüfung mittels Ultraschall sind so genannte Gruppenstrahlerköpfe bzw. Phased-Array-Prüfköpfe mit einer Vielzahl von Einzelwandlern bekannt, welche in linearen oder zweidimensionalen Arrays unmittelbar nebeneinander angeordnet sind. Derartig ausgebildete Ultraschallwandleranordnungen ermöglichen die phasengesteuerte Ansteuerung von Einschallwinkeln und der Fokusierungstiefe der zur Werkstoffprüfung in ein Bauteil eingekoppelten Schallwellen.

Typischer Weise werden zur zerstörungsfreien Werkstoffprüfung Prüfköpfe mit einer linearen Geometrie von Einzelwandlern eingesetzt. Die in einem bestimmten Winkel erfassten Echosignale können beispielsweise in Form von Amplituden- oder A-Scans visualisiert werden. Mit Hilfe einer Variation des Einschallwinkels und einer helligkeits- oder farbmodulierten Darstellung von Bildpunkten kann der Amplituden-Scan in bekannter Art und Weise derart erweitert werden, dass Querschnittsbilder als so genannte B-Bilder dargestellt werden. In jedem Fall können jedoch so nur Querschnitte dargestellt werden, deren Lagen von der linearen Anordnung der Einzelwandler vorgegeben sind.

Abhängig von der Geometrie des zu prüfenden Werkstücks bzw. Bauteils sind deshalb im Allgemeinen mehrere unterschiedlich ausgerichtete Arrays notwendig, die in der Gruppenstrahlanordnung vereint sind, um verschiedene Einschallrichtungen zu realisieren und eine zur Erfassung von unterschiedlich ausgebildeten Fehlerquellen hinreichende Abdeckung sicherzustellen. Die große Anzahl von Arrays, welche bis zu 14 Arrays in einer Gruppenstrahlanordnung betragen kann, bedingt jedoch einen erheblichen Raumbedarf und eine komplexe Zustellmechanik, damit die Arrays zur Prüfung des Werkstücks an diesem entsprechend angestellt werden können. Daher ist auch die Prüfung des Bauteils mit einer solchen Gruppenstrahlanordnung relativ komplex und zeitaufwändig.

Ferner sind Ultraschallprüfköpfe mit in zweidimensionalen Arrays angeordneten und voneinander beabstandeten Einzelwandlern beispielsweise aus DE 20 2012 012 530 U1 bekannt. Mit solchen Ultraschallprüfköpfen kann der Schallkegel in dem unter der Ultraschallwandleranordnung liegenden Halbraum geschwenkt werden, um bei fixiertem Ultraschallprüfkopf ein dreidimensionales Bild etwaig vorhandener Fehler zu rekonstruieren. DE 20 2012 012 530 U1 schlägt eine "ausgedünnte" Anordnung von Einzelwandlern vor, bei der der Abstand zwischen den Einzelwandlern wenigstens λ/2 und höchstens 3λ/2 beträgt, wobei mit λ hier die Wellenlänge bezeichnet ist.

WO 2008/010712 A1 beschreibt einen Phased-Array-Ultraschallprüfkopf mit Zylindersymmetrie. Die Einzelwandler sind in Reihen um einen Umfang des zylindersymetrischen Ultraschallprüfkopfs angeordnet. In einem Ausführungsbeispiel sind die in Reihen angeordneten Einzelwandler zueinander in einem Winkel angeordnet.

US 2009/0133501 A1 beschreibt eine Einrichtung zur Ultraschallprüfung, die einen zweidimensionalen Array von Einzelwandlern aufweist, welche in einer flexiblen Matte eingebracht sind. Zur Einkoplung von Schallwellen sind die Einzelwandler schräg bezüglich einer Auflagefläche des Arrays angeordnet.

Aus "Aperiodic and Deterministic 2D Phased Array Structures for Ultrasonic Imaging", TWEEDIE, A., MURRAY, V., erschienen in IEEE International Ultrasonics Symposium Proceedings, 2009, Seite 406 bis 419, sind ferner Phased-Array-Anordnungen bekannt, die von einer regelmäßigen, matrix-förmigen Anordnung der Ultraschallwandler abweichen. Insbesondere sind stochastisch verteilte Anordnungen von Ultraschallwandlern und spiralarmförmige Verteilungen von Ultraschallwandlern beschrieben.

Ausgehend von diesem Stand der Technik ist es Aufgabe der vorliegenden Erfindung, einen verbesserten Ultraschallprüfkopf und ein verbessertes Verfahren anzugeben, bei dem eine zuverlässige Werkstoffprüfung auch in schwer zugänglichen Bereichen des Bauteils oder bei komplexen Bauteilgeometrien ermöglicht ist.

Hinsichtlich der Vorrichtung wird die Aufgabe gelöst durch einen Ultraschallprüfkopf der eingangs genannten Art mit den weiteren Merkmalen des Patentanspruchs 1.

Vorteilhafte Ausgestaltungen der Erfindung sind Gegenstand der Unteransprüche.

Ein Ultraschallprüfkopf zur zerstörungsfreien Werkstoffprüfung eines Bauteils weist eine zur Ankopplung an das Bauteil ausgebildete Ultraschallwandleranordnung auf, die eine Vielzahl von zueinander beabstandeten und in einem zweidimensionalen Array angeordneten Einzelwandlern umfasst. Erfindungsgemäß ist zumindest einer der Einzelwandler des Arrays bezüglich einer Auflagefläche des Arrays in einem derart vorgebbaren spitzen Winkel angeordnet, dass die von dem zumindest einen Einzelwandler emittierbaren Schallwellen beim Aufsetzen des Ultraschallprüfkopfs an das Bauteil in einer Vorzugsrichtung einkoppelbar sind, welche von einer senkrecht zur Auflagefläche verlaufenden Flächennormalen abweicht.

Die Erfindung basiert auf der Beobachtung, dass das Schwenken des Schallbündels in dem unterhalb des Arrays liegenden Halbraum zur Detektion von Fehlern mittels der zeitversetzen Ansteuerung der einzelnen Einzelwandler nur innerhalb bestimmter Grenzen erfolgen kann. Dies ist dadurch begründet, dass die Intensität des in das Bauteil eingekoppelten Schallkegels randseitig abnimmt und somit die Nachweisempfindlichkeit reduziert ist. Auf der anderen Seite ist es abhängig von der Bauteilgeometrie oftmals nicht notwendig, den gesamten Halbraum zu betrachten. Ist lediglich ein Teilbereich des Halbraums, der im Folgenden als "Viertelraum" bezeichnet wird, für die Untersuchung relevant, so bietet es sich an, vorrichtungsseitig eine Vorzugsrichtung für die emittierten Schallwellen vorzusehen, um die der Schallkegel mittels der bekannten zeitversetzten bzw. phasenabhängen Ansteuerung der Einzelwandler verschwenkt werden kann. Dadurch wird die Intensität der in das Bauteil eingekoppelten Schallwellen gezielt im untersuchungsrelevanten Bereich erhöht, so dass eine zuverlässige Werkstoffprüfung sichergestellt ist. Ein zusätzlicher entgegengesetzt gerichteter Ultraschallprüfkopf kann insbesondere mit dem ersten Ultraschallprüfkopf den gesamten Halbraum erfassen.

Insbesondere bei Bauteilen, die Bohrungen oder dergleichen aufweisen, ist der jenseits der Bohrung liegende Bereich bei Senkrechteinschallung nur unzulänglich für die zerstörungsfreie Werkstoffprüfung mittels Ultraschall zugänglich, da der in das Bauteil eingekoppelte Schall an der Grenzfläche der Bohrung vollständig reflektiert wird. Die Schallwellen müssen daher schräg in das Bauteil eingekoppelt werden, damit der von der Bohrung verdeckte Bereich beispielsweise mittel Wellenumwandlung geprüft werden kann. Eine konventionelle Einkopplung der Schallwellen in das Bauteil, bei der die Ausrichtung lediglich durch die phasengesteuerte Ansteuerung der jeweils parallel zur Auflagefläche angeordneten Einzelwandler erfolgt, ist in solchen Fällen jedoch unbefriedigend, da oftmals keine zur Untersuchung hinreichend große Schallintensität erreicht wird. Zudem treten bei einer schräg bezüglich der Flächennormalen verlaufenden Beobachtungsrichtung, insbesondere bei rekonstruierenden Prüftechniken, wie die SAFT-Technik (Synthetic Aperture Focusing Technique), Bildartefakte auf, welche durch Interferenzeffekte verursacht sind. Diese Bildartefakte müssen nachträglich mittels Filter aus den erfassten Bilddaten entfernt werden, um zuverlässige Aussagen über etwaige Defekte im Werkstoff des Bauteils treffen zu können.

Die Erfindung versucht somit die Prüfung vom Bauteilen mit komplexer Bauteilgeometrie bzw. in schwer erreichbaren Teilbereichen des Bauteils dadurch zu verbessern, dass die Einkopplung der Schallwellen in einer Vorzugsrichtung erfolgt, die schräg bezüglich der Auflagefläche verläuft und somit von der von der Flächennormalen vorgegebenen Richtung abweicht. Diese Vorzugsrichtung des Schallfelds ist vorrichtungsseitig von der Ausrichtung des zumindest einen Einzelwandlers bezüglich der Auflagefläche des Arrays vorgegeben. Eine Schwenkung des Schallfeldes in dem unterhalb des Ultraschallprüfkopfs liegenden Halbraum kann weiterhin in bekannter Art und Weise insbesondere mittels einer entsprechenden phasenabhängigen Ansteuerung der Einzelwandler erfolgen. Ebenso kann der unterhalb des Ultraschallprüfkopfs liegende Halbraum insbesondere mittels SAFT rekonstruiert werden. Die Vorgabe der Vorzugsrichtung für das Schallfeld trägt zudem zur Reduzierung der Bildartefakte im geprüften Bereich des Bauteils wesentlich bei.

Erfindungsgemäß ist zur Verbesserung der Einkopplung von Schallenergie in das Bauteil der zumindest eine Einzelwandler derart ausgebildet, dass dieser in verschiedenen Richtungen unterschiedlich dimensioniert ist. Der zumindest eine Einzelwandler weist eine laterale Ausdehnung und eine senkrecht dazu verlaufende vertikale Ausdehnung auf, wobei die laterale Ausdehnung parallel zur Auflagefläche verläuft und die vertikale Ausdehnung gegenüber der Auflagefläche im spitzen Winkel verläuft. Die vertikale Ausdehnung weist einen Betrag auf, der größer ist als ein Betrag der lateralen Ausdehnung. Die Einzelwandler haben gemäß bevorzugten Ausführungsformen eine rechteckige oder eine ovale Ausgestaltung, wobei die längere Abmessung des Einzelwandlers entlang der vertikalen Ausdehnung angeordnet ist. Dies ermöglicht die Einkopplung von Schallwellen mit erhöhter Intensität, so dass die Nachweisempfindlichkeit für Defekte erhöht bzw. das Verhältnis des Signals zum Rauschen verbessert ist.

Das zweidimensionale Array ist ein sogenanntes "ausgedünntes" Phased-Array mit voneinander beabstandeten Einzelwandlern. Der Abstand der nächstgelegenen Einzelwandler im Array beträgt vorzugsweise zwischen 2 λ und mehr, wobei mit λ die Wellenlänge bezeichnet ist.

Besonders bevorzugt sind die Einzelwandler derart ungleichmäßig über die Auflagefläche des Arrays verteilt angeordnet, dass ein Betrag eines Abstandes zwischen zueinander im Array nächstgelegenen Einzelwandlern variiert. Dadurch werden die die Bildartefakte verursachenden Interferenzeffekte weiter unterdrückt, die im Allgemeinen bei regelmäßigen Anordnungen, insbesondere bei matrixförmigen Anordnungen, verstärkt auftreten. Die Anordnung erfolgt dabei dergestalt, dass der Betrag des Abstands zwischen im Array nächstgelegenen Einzelwandlern, also Einzelwandler, die voneinander in einem minimalen Abstand angeordnet sind, unterschiedliche Werte annehmen kann.

Gemäß einem bevorzugten Ausführungsbeispiel kann somit der Betrag des Abstands von im Array nächstgelegenen Einzelwandlern im Bereich von 2 λ und mehr variieren.

Im Sinne der vorliegenden Spezifizierung wird die Orientierung der Einkoppelfläche lokal bezüglich der Tangentialfläche des Bauteils am Ort der Einschallung definiert. Dies gilt insbesondere bei Bauteilen und/oder Arrays, die gekrümmte oder gewellte Oberflächen aufweisen. Für die Auflagefläche des zweidimensionalen Arrays und die Orientierung des zumindest einen Einzelwandlers bezüglich der Auflagefläche des Arrays gelten die genannte Definition bezüglich der Tangentialfläche des Arrays entsprechend analog. Die Tangentialfläche definiert lokal eindeutig eine Flächennormale, die zur Definition der Vorzugsrichtung der in das Bauteil eingekoppelten Schallwellen dient. Der spitze Winkel im Sinne der vorliegenden Spezifizierung ist ein Winkel größer als 0°, jedoch kleiner als 90°. Die Vorzugsrichtung verläuft dementsprechend schräg bezüglich der Flächennormalen und der Tangentialfläche. Zu beachten ist ferner, dass am Grenzübergang Brechung auftritt, so dass die Abweichung von der die Auflagefläche lokal beschreibende Flächennormale bzw. die Einkoppelfläche lokal beschreibende weitere Flächennormale auch vom Material des untersuchten Bauteils abhängt.

In einem bevorzugten Ausführungsbeispiel der Erfindung sind die Einzelwandler auf keilförmigen Koppelelementen angeordnet, die aus einem schallleitenden Kunststoff bestehen. Die Auflagefläche des Arrays wird von den den Einzelwandler gegenüberliegenden Flächen der Koppelelemente gebildet, die zur Einkopplung von Schallwellen auf der Einkoppelfläche des Bauteils aufliegen. Da die zu untersuchenden Bauteile typischer Weise aus metallischen Materialen bestehen, in denen die Schallgeschwindigkeit gegenüber der im Koppelelement vorliegenden Schallgeschwindigkeit erhöht ist, werden die Schallwellen beim Eintritt in das Bauteil vom Einfallslot weg gebrochen. Jedoch sind mittels dem Ultraschallprüfkopf auch nichtmetallische Bauteile prüfbar.

Der zumindest eine Einzelwandler ist bezüglich der Auflagefläche des Arrays im spitzen Winkel angeordnet, so dass die von diesem Einzelwandler emittierten Schallwellen bezüglich der Auflagefläche und der Einkoppelfläche in der von der jeweiligen Flächennormalen abweichenden Vorzugsrichtung in das Bauteil eingekoppelt werden. Der Ultraschallprüfkopf ist bevorzugt so ausgebildet, dass der zumindest eine Einzelwandler Schallwellen in die Vorzugsrichtung emittiert, wenn der Ultraschallprüfkopf auf das Bauteil derart aufgesetzt ist, dass die Auflagefläche des Arrays parallel zur Einkoppelfläche anliegt. Eine derartige Ausbildung ist vorteilhaft, da dadurch reproduzierbare Einschallwinkel insbesondere bei einer mehrfachen Prüfung des gleichen Bereichs des Bauteils sichergestellt sind.

In einem bevorzugten Ausführungsbeispiel der Erfindung sind die Einzelwandler im Array entlang von Spirallinien angeordnet. Es hat sich gezeigt, dass dadurch dem Auftreten von Interferenzeffekten effektiv entgegen gewirkt werden kann, so dass ein besseres Signal-Rausch-Verhältnis für eine aussagekräftige Fehlerdetektion sichergestellt ist.

In einem anderen bevorzugten Ausführungsbeispiel der Erfindung sind die Einzelwandler über die Auflagefläche des Arrays stochastisch verteilt angeordnet. Die Beträge der Abstände der nächstgelegenen Einzelwandler folgen demnach einer stochastischen Verteilung, insbesondere einer Poisson-Verteilung. Einer konstruktiven Interferenz von Schallwellen, die von unterschiedlichen Einzelwandlern des Arrays emittierbar sind, wird somit entgegen gewirkt, so dass seitliche Extrema, Nebenkeulen oder dergleichen unterdrückt sind. Das resultierende verbesserte Signal-Rausch-Verhältnis ermöglicht eine zuverlässige Analyse der detektierten Fehlstellen insbesondere hinsichtlich deren Lage, Ausdehnung und Orientierung.

Bevorzugt nimmt der Betrag des Abstandes von im Array nächstgelegenen Einzelwandlern in einem zentralen Bereich des Arrays im Mittel einen ersten Wert an. Der Betrag des Abstandes von im Array nächstgelegenen Einzelwandlern nimmt in einem peripheren, den zentralen Bereich umgebenden Bereich des Arrays im Mittel einen zweiten Wert an. Dabei ist der erste Wert kleiner vorzugsweise als der zweite Wert. Mit anderen Worten ist die Dichte der Einzelwandler in dem zentralen Bereich erhöht, so dass die Einzelwandler dort im Mittel näher zueinander angeordnet sind, als die Einzelwandler des peripheren Bereichs. Die ersten und zweiten Werte entsprechen somit dem mittleren Abstand der nächstgelegenen Einzelwandler des zentralen bzw. des peripheren Bereichs. Derartig ausgebildete Arrays ermöglichen eine besonders gleichmäßige Beschallung des Werkstücks bzw. des Bauteils, so dass Detektion von Fehlern bzw. Defekten im Werkstoff verbessert ist.

Die Ausrichtung des zumindest einen Einzelwandlers ist vorzugsweise bezüglich der Auflagefläche des Arrays anwendungsbezogen starr vorgegeben, so dass die Orientierung des im spitzen Winkel bezüglich der Auflagefläche des Arrays angeordneten Einzelwandlers beim Aufsetzen relativ zur Prüfober- oder Einkoppelfläche eindeutig definiert ist.

In Weiterbildung der Erfindung ist vorgesehen, dass mehrere Einzelwandler im Arrays bezüglich der Auflagefläche des Arrays in vorgebbaren spitzen Winkeln angeordnet sind. Gemäß zueinander alternativen Ausführungsformen nehmen die spitzen Winkel, in denen die Einzelwandler angeordnet sind, den gleichen oder unterschiedliche Werte ein. Derartige Ausführungen können insbesondere zur Prüfung von Bauteilen mit zylindrischer Geometrie wie beispielsweise Räder von Schienenfahrzeugen angepasst sein, wobei eine zylindrische Lauffläche als Einkoppelfläche fungiert. Die Vorzugsrichtung verläuft dann im Wesentlichen im spitzen Winkel zur Flächennormalen, um eine Einschallung in "quasiradialer" bis "quasitangentialer" Richtung zu ermöglichen.

Gemäß alternativen Ausführungsformen ist vorgesehen, die Einzelwandler in der gleichen Ausrichtung oder in unterschiedlichen Ausrichtungen anzuordnen. Entsprechend einer möglichen Ausführung sind alle Einzelwandler derart angeordnet, dass die die Ausrichtung beschreibenden spitzen Winkel den gleichen Wert annehmen.

Vorzugsweise betragen die sich ergebenden und gegebenenfalls durch eine phasenabhängige Ansteuerung der Einzelwandler modifizierten Einschallwinkel zwischen 0,1° und 84° bezüglich der Auflagefläche. Mit anderen Worten kann der Einschallwinkel des von dem zumindest einen Einzelwandler emittierbaren Schallfelds bezüglich der Auflagefläche zwischen 0,1° und 84° variieren. Besonders bevorzugt beträgt der Einschallwinkel mehr als 1°. Bei dem vorstehend genannten Beispiel der Prüfung der Räder von Schienenfahrzeugen entspricht ein Einschallwinkel von weniger als 1° einer Ausrichtung nahezu entlang der Flächennormalen, die bei einer Einkopplung über die Lauffläche in radialer Richtung verläuft, somit einer "quasiradialen" Einschallung in das Bauteil, wobei aber noch die zuvor angesprochene Brechung zu berücksichtigen ist. Entsprechend ist bei einem Einschallwinkel von 84° die Vorzugsrichtung des Schallfeldes nahezu in tangentialer, also in "quasitangentialer" Richtung gerichtet. Da das Rad eines Schienenfahrzeugs oftmals Konturübergänge, Bohrungen oder dergleichen zur Befestigung weiterer Komponenten aufweist, ermöglicht die Einschallung in "quasiradialer" bis "quasitangentialer" Richtung die Erfassung von Defekten in Bereichen, die sich auf der der Lauffläche abgewandten Seite der Bohrung befinden. Bei einer konventionellen Einschallung in radialer Richtung wäre eine Prüfung des Bauteils in diesem jenseits der Bohrung oder einer Ausnehmung gelegenen Bereich nicht unmittelbar möglich.

Zur Prüfung wird der Schallkegel durch Ansteuerung der Einzelwandler sowohl in lateraler Richtung als auch in vertikaler Richtung verschwenkt. Der Lateralschwenk weist dabei keine Winkelvorprägung durch das insbesondere keilförmig ausgebildete Koppelelement auf und erfordert daher eine Punktrichtwirkung. Bevorzugt liegt daher die laterale Ausdehnung der Einzelwandler im Bereich von λ, besonders bevorzugt zwischen λ/2 oder 3λ/2. Die Verschwenkung in vertikaler Richtung ist durch die vorgegebene Vorzugsrichtung vorgeprägt und erfordert daher nur eine Verschwenkung in einem begrenzten Bereich. Die vertikale Ausdehnung ist daher vorzugsweise größer dimensioniert und beträgt bevorzugt weniger als 6λ, besonders bevorzugt 2 bis 3 λ. Dies ermöglicht eine höhere Ausbeute an Schallenergie.

Die Prüffrequenz und damit die Wellenlänge λ wird abhängig vom Material und von der Geometrie des zu prüfenden Bauteils, sowie abhängig von der Fehlergeometrie, -lage und -orientierung gewählt.

Hinsichtlich des Verfahrens wird die Aufgabe gelöst durch ein Verfahren der eingangs genannten Art mit den weiteren Merkmalen des Patentanspruchs 11.

Bei dem Verfahren zur zerstörungsfreien Werkstoffprüfung des Bauteils ist ein Ultraschallprüfkopf vorgesehen, der wie vorstehend beschrieben ausgebildet ist, so dass zunächst auf die bisherigen Ausführungen verwiesen wird.

Erfindungsgemäß wird der Ultraschallprüfkopf derart zur Prüfung des Bauteils auf die Einkoppelfläche des Bauteils aufgesetzt, dass die von dem zumindest einen Einzelwandler emittierten Schallwellen in einer Vorzugsrichtung eingekoppelt werden, welche von einer senkrecht zur Einkoppelfläche verlaufenden weiteren Flächennormalen abweicht. Die weitere Flächennormale ist dabei wie bereits beschrieben bezüglich der Tangentialfläche des Bauteils definiert.

Wie bereits beschrieben, ermöglicht die Einschallung in einer schräg zur Flächennormale verlaufenden Vorzugsrichtung das Auffinden von Fehlern in Bereichen, die andernfalls bei einer konventionellen Einkopplung der Schallwellen entlang einer senkrecht zur Einkoppelfläche verlaufenden Vorzugsrichtung nur schwer bzw. überhaupt nicht zugänglich wäre. Insbesondere kann so der von der Einkoppelfläche abgewandte und jenseits einer Bohrung oder Aussparung gelegene Bereich untersucht werden, ohne dass mit einem verstärkten Auftreten von durch Interferenzeffekte verursachte Bildartefakten gerechnet werden muss. Das Verfahren ermöglicht somit die Erweiterung des die detektierbaren Fehler umfassenden Fehlerkatalogs.

Es versteht sich, dass die Ausrichtung des zumindest einen Einzelwandlers oder - entsprechend einer möglichen Ausbildung der Erfindung - die Ausrichtung aller Einzelwandler die Vorzugsrichtung definiert. Dadurch wird die Einschallung in dieser vorgegebenen Richtung unterstützt. Unbenommen davon ist weiterhin vorgesehen, die konkrete Einschallrichtung und Ausdehnung des Schallfeldes beispielsweise durch eine phasengesteuerte Ansteuerung der Einzelwandler des Arrays insbesondere in lateraler und/oder vertikaler Richtung anzupassen. Mittels einer entsprechenden Ansteuerung der Einzelwandler oder einer geeigneten Rekonstruktion ist auch eine gezielte Nachbildung von unterschiedlichen Schallfeldcharakteristiken möglich, insbesondere können so die Prüfergebnisse, die mittels konventioneller Prüfköpfe und/oder Prüfköpfe mit linearen Arrays von Einzelwandlern erfasst wurden, rekonstruiert werden und beispielsweise einer vergleichenden Überprüfung unterzogen werden.

Ferner ist vorgesehen, zur zerstörungsfreien Werkstoffprüfung die Einzelwandler des Arrays gemäß bekannter Verfahren gleichzeitig oder sequentiell als Sende- und Empfangseinrichtungen für Schallwellen zu verwenden. Der Ultraschallprüfkopf kann zur Werkstoffprüfung gleichermaßen in Verfahren eingesetzt werden, die mit den bekannten Migrations- oder Impuls-Echo-Techniken arbeiten. Insbesondere kann die Prüfung mittels Ultraschall derart erfolgen, dass Schallwellen von einer Anzahl von Einzelwandlern emittiert werden, deren reflektierte Echosignale von anderen Einzelwandlern des Arrays registriert werden.

Die bei der Prüfung des Bauteils erfassten Daten können insbesondere in einer Speichereinheit hinterlegt werden und Informationen über einen zeitabhängigen Amplitudenverlauf der erfassten Signale beinhalten. Zur Auswertung derartiger Daten sind bildgebende Verfahren bekannt, die bevorzugt auf einer tomographischen Rekonstruktion des Werkstücks basieren.

Das Verfahren zur zerstörungsfreien Werkstoffprüfung eignet sich sowohl zur Prüfung von rotationssymmetrischen Bauteilen mit konvex oder konkav gekrümmten Oberflächen als auch zur Prüfung von ebenen Bauteilen. Insbesondere können z. B. zylindrische oder kegelförmige Bauteile mit Zentrumsbohrungen geprüft werden.

Besonders bevorzugt wird der Ultraschallprüfkopf derart an eine Mantelfläche eines zylindrischen Abschnitts des Bauteils angestellt, dass die Vorzugsrichtung der emittierten Schallwellen zwischen einer senkrecht zur Mantelfläche verlaufenden radialen und einer parallel zur Mantelfläche verlaufenden tangentialen Richtung verläuft. Mit anderen Worten verläuft die Vorzugsrichtung bevorzugt in einem spitzen Winkel von 0,1° bis 84° bezüglich der Flächennormalen in "quasiradialer" bis "quasitangentialer" Richtung. Abhängig von den konkreten Gegebenheiten des zu prüfenden Bauteils kann auch eine Einschallung mit einer Vorzugsrichtung sinnvoll sein, die in tangentialer oder radialer Richtung der Einkoppelfläche verläuft.

Die Einschallung muss nicht zwangsläufig bei der Prüfung von im Wesentlichen zylindrisch ausgebildeten Bauteilen über die Mantelfläche erfolgen. Insbesondere kann die Prüfung von Komponenten eines Radsatzes eines Schienenfahrzeugs auch mittels einer Einkopplung von Schallwellen über eine axiale Fläche erfolgen. Der Ultraschallprüfkopf wird dann an das Bauteil angestellt, so dass die Vorzugsrichtung in axialer Richtung oder, bei einer geringfügigen Abweichung hiervon, in "quasiaxialer" Richtung verläuft.

Bei zu prüfenden Bauteilen, die zumindest Abschnitte aufweisen, welche als Hohlzylinder ausgebildet sind, ist in alternativen Ausführungsbeispielen vorgesehen, den Ultraschallprüfkopf in das Bauteil einzusetzen und die Schallwellen über eine innere Zylinderfläche des Bauteils einzukoppeln.

Es ist vorgesehen, longitudinale und/oder transversale Wellenmoden zur Prüfung des Bauteils einzusetzen. In einem möglichen Ausführungsbeispiel können auch Kriechwellen zur zerstörungsfreien Werkstoffprüfung in das Bauteil eingekoppelt werden.

Besonders bevorzugt ist das Bauteil ein Rad eines Schienenfahrzeugs. Gegebenenfalls kann eine Anpassung an unterschiedliche Rad-Typen insbesondere hinsichtlich von Einschallorten und -richtungen durch eine entsprechende Ansteuerung der Einzelwandler vorgenommen werden. Dies kann beispielsweise über eine Anpassung der Parameterbelegung in der Bediensoftware erfolgen, wofür kein aufwändiger Austausch des Ultraschallprüfkopfs oder Umbau der Prüfmechanik notwendig ist.

Zur Prüfung des Bauteils kommen in einem möglichen Ausführungsbeispiel mehrere Ultraschallprüfköpfe mit Impuls-Echo-Technik oder Sender-Empfänger-Technik gleichzeitig zum Einsatz, um eine hinreichende Abdeckung von zu prüfenden Bereichen des Bauteils sicherzustellen. Ferner sind in einem anderen möglichen Ausführungsbeispiel mehrere Ultraschallprüfköpfe vorgesehen, um besondere Prüftechniken, wie beispielsweise eine V-Durchschallung, eine Tandemprüfung oder Wellenumwandlungstechniken zu ermöglichen. Dies erhöht in vorteilhafter Weise die Aussagekraft der erhaltenen Messergebnisse, so dass Fehler zuverlässig erkannt und analysiert werden können.

Die Anzahl der zur Prüfung notwendigen Ultraschallprüfköpfe ist gegenüber bekannten Verfahren, die mit linearen Arrays aufweisenden Ultraschallprüfköpfen arbeiten, reduziert, da das emittierte Schallfeld flexibel an die geometrischen Besonderheiten des zu prüfenden Bauteils angepasst werden kann und eine Erfassung von dreidimensionalen Bilddaten ermöglicht ist. Dazu werden ausgedünnte Arrays mit einer reduzierten Anzahl von Einzelwandlern eingesetzt, bei einer Winkeleinschallung ein verbessertes Signal-zu-Rausch Verhältnis erreichen.

Im Folgenden werden mögliche Ausführungsbeispiele der Erfindung mit Bezug auf die Zeichnungen näher erläutert. Dabei zeigen:
- Fig. 1: ein zweidimensionales Array eines Ultraschallprüfkopfs gemäß einem ersten Ausführungsbeispiel in einer schematischen Draufsicht,
- Fig. 2: ein zweidimensionales Array eines Ultraschallprüfkopfs gemäß einem zweiten Ausführungsbeispiel in einer schematischen Draufsicht,
- Fig. 3: eine Anordnung von Einzelwandlern bezüglich einer Auflagefläche des Arrays gemäß dem ersten oder dem zweiten Ausführungsbeispiel in einer schematischen Schnittdarstellung,
- Fig. 4: ein drei Ultraschallprüfköpfe umfassendes Prüfsystem in einer schematischen Draufsicht,
- Fig. 5: eine Einkopplung von Schallwellen in ein Rad bei einem Verfahren zur zerstörungsfreien Werkstoffprüfung in einer schematischen Schnittdarstellung,
- Fig. 6: die Einkopplung von Schallwellen in das Rad bei dem Verfahren zur zerstörungsfreien Werkstoffprüfung in einer weiteren schematischen Schnittdarstellung;
- Fig. 7A bis 7C: die Einkopplung von Schallwellen in das Rad bei dem Verfahren zur zerstörungsfreien Werkstoffprüfung in weiteren schematischen Detaildarstellungen;
- Fig. 8A und 8B: ein Ultraschallprüfkopf gemäß einem dritten Ausführungsbeispiel in einer Draufsicht und einer Schnittdarstellung;
- Fig. 9A und 9B: ein Ultraschallprüfkopfs gemäß einem vierten Ausführungsbeispiel in einer perspektivischen Darstellung und einer Schnittdarstellung.

Einander entsprechende Teile sind in allen Figuren mit den gleichen Bezugszeichen versehen.

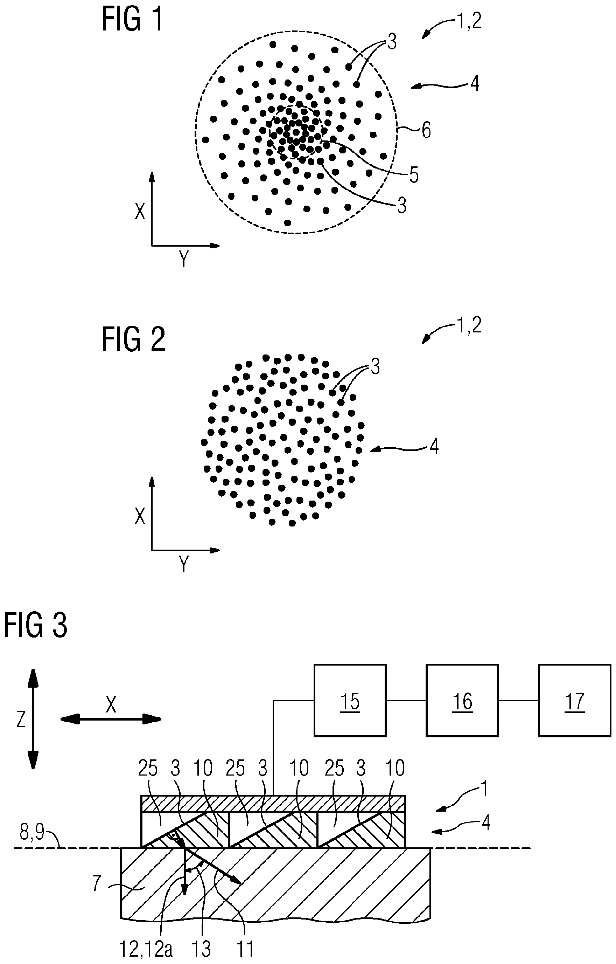

Figur 1 zeigt einen Ultraschallprüfkopf 1 zur zerstörungsfreien Werkstoffprüfung gemäß einem ersten Ausführungsbeispiel der Erfindung. Gezeigt ist eine Draufsicht auf eine Ultraschallwandleranordnung 2, die eine Vielzahl von Einzelwandlern 3 umfasst. Die Einzelwandler 3 sind in einem im Wesentlichen plan ausgeführten Array 4 angeordnet, der sich in dem hier gezeigten Beispiel in der von der ersten Achse X und der zweiten Achse Y eines kartesischen Koordinatensystems aufgespannten XY-Ebene erstreckt. Die Ultraschallwandleranordnung 2 ist zur Ankopplung an ein in Figur 1 nicht näher dargestelltes Bauteil 7 ausgebildet, so dass die von den Einzelwandlern 3 emittierbaren Schallwellen zur zerstörungsfreien Werkstoffprüfung in das Bauteil 7 einkoppelbar sind.

Die Einzelwandler 3 sind in dem ersten Ausführungsbeispiel entlang von Spirallinien angeordnet. Der Abstand eines jeden Einzelwandlers 3 zu seinem im Array 4 nächstliegend benachbarten Einzelwandler 3 variiert für verschiedene Positionen des Einzelwandlers 3 im Array 4. Deutlich zu sehen ist, dass die Einzelwandler 3 in einem gestrichelt gekennzeichneten zentralen Bereich 5 dichter angeordnet sind, als die Einzelwandler 3 in dem den zentralen Bereich 5 umgebenden peripheren Bereich 6. Der Betrag des Abstandes der jeweils nächstgelegenen Einzelwandler 3 nimmt somit im zentralen Bereich 5 im Mittel einen ersten Wert an, der kleiner ist ein zweiter Wert, der den Betrag des mittleren Abstandes der im peripheren Bereich 6 angeordneten Einzelwandler 3 beschreibt.

Die ungleichmäßige Verteilung der Einzelwandler 3 im Array 4 bewirkt eine Unterdrückung von unerwünschten Interferenzeffekten, die insbesondere zu seitlich auftretenden Bildartefakten führen können.

Figur 2 zeigt ein zweites Ausführungsbeispiel der Erfindung, bei der die ungleichmäßige Verteilung der Einzelwandler 3 im Array 4 zur Unterdrückung der Interferenzeffekte einer stochastischen Verteilung entspricht. Die Variation des Betrags für den Abstand von nächstgelegenen Einzelwandlern 3 folgt hier einer Poisson-Verteilung. Im Übrigen entspricht die in Figur 2 gezeigte Ausführungsform dem ersten Ausführungsbeispiel, so dass auf die diesbezügliche Beschreibung verwiesen wird.

Figur 3 zeigt eine schematische Schnittdarstellung durch den Ultraschallprüfkopf 1, wobei sich die dargestellte Schnittebene parallel zu der ersten Achse X und einer senkrecht zur XY-Ebene verlaufenden dritten Achse Z des kartesischen Koordinatensystems erstreckt. Die Ultraschallwandleranordnung 2 ist zur Einkopplung von Schallwellen auf das Bauteil 7 aufgesetzt. Alle Einzelwandler 3 des Arrays 4 sind auf keilförmigen Koppelelementen 10 angeordnet, die aus schallleitendem Kunststoff bestehen. Das zu untersuchende Bauteil 7 besteht in dem gezeigten Beispiel aus einem Metall, so dass die in das Bauteil eingekoppelte Schallwelle beim Eintritt von einer Flächennormale 12, 12a weg gebrochen wird. Auf der dem Koppelelement 10 abgewandten Seite des Einzelwandlers 3 ist zur Dämpfung der mechanischen Schwingungen ein Dämpfungselement 25 vorgesehen.

Die Koppelelemente 10 bilden eine Auflagefläche 8 des Arrays 4, die plan auf eine zur Einkopplung von Schallwellen in das Bauteil 7 vorgesehene Einkoppelfläche 9 anliegt. Die Einzelwandler 3, genauer gesagt deren Wandleroberflächen, sind schräg angeordnet, so dass die von den Einzelwandlern 3 emittierbaren bzw. empfangenen Schallwellen eine Vorzugsrichtung 11 aufweisen, die bezüglich der senkrecht zur Auflagefläche 8 des Arrays orientierten Flächennormalen 12 und der senkrecht zur Einkoppelfläche 9 orientierten weiteren Flächennormalen 12a abweicht.

In dem in Figur 3 exemplarisch gezeigten Ausführungsbeispiel verlaufen die Auflagefläche 8 und die Einkoppelfläche 9 parallel zueinander und parallel zur XY-Ebene. Die beiden Flächennormalen 12, 12a fallen daher zusammen. Entsprechend verlaufen die Flächennormalen 12, 12a parallel zur dritten Achse Z und die Vorzugsrichtung 11 ist bezüglich der Flächennormalen 12, 12a im spitzen Winkel 13 angeordnet.

Der Ultraschallprüfkopf 1 ist mit einer Steuereinheit 15 zur Ansteuerung der Einzelwandler 3, mit einer Speichereinheit 16 zum Abspeichern von erfassten Messergebnissen und mit einer Auswerteeinheit 17 zum Auswerten der Messergebnisse und Ermittlung von dreidimensionalen Bilddaten verbunden.

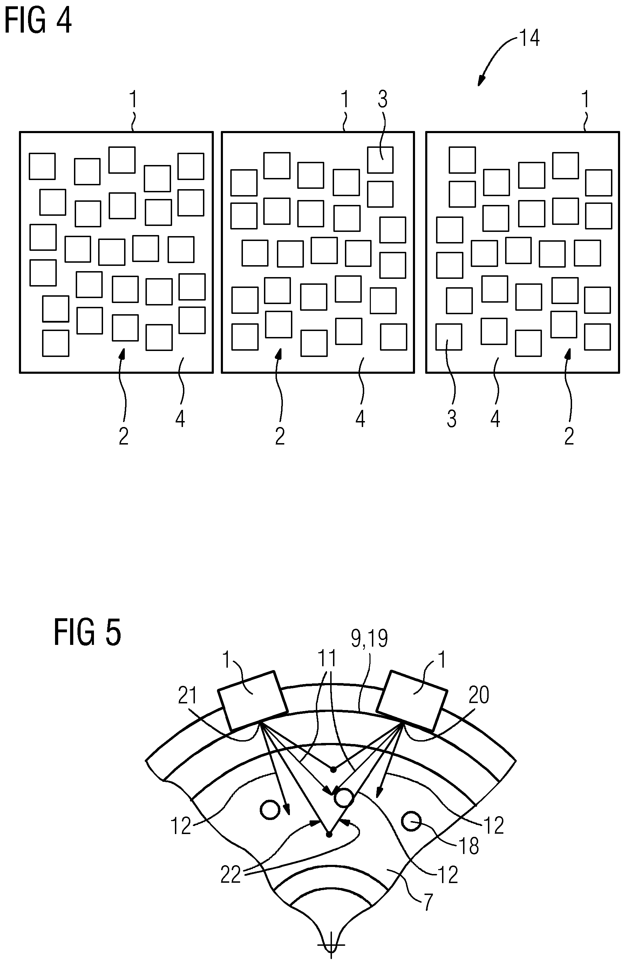

Figur 4 zeigt ein Prüfsystem 14, das drei voneinander unabhängig positionierbare Ultraschallprüfköpfe 1 umfasst, die jeweils Ultraschallwandleranordnungen 2 mit im Array 4 stochastisch verteilten Einzelwandlern 3 aufweisen. Die gezeigten Ultraschalköpfe 1 sind somit entsprechend dem in Figur 2 gezeigten zweiten Ausführungsbeispiel ausgeführt, so dass auf die diesbezügliche Beschreibung verwiesen wird.

Das Prüfsystem 14 ist besonders dazu geeignet, um bei der zerstörungsfreien Werkstoffprüfung des darunter liegenden Bauteils 7, insbesondere bei der Prüfung von Komponenten eines Radsatzes von Schienenfahrzeugen, sich gegebenenfalls geeignet überlappende Schallfelder bereit zu stellen. Insbesondere ist vorgesehen beispielsweise zwei Arrays 4, wie in Figur 5 gezeigt, zur V-Durchschallung am Bauteil 7 anzuordnen.

Figur 5 illustriert schematisch eine mögliche Einschallung bei einem Verfahren zur zerstörungsfreien Werkstoffprüfung. Das zu prüfende Bauteil 7 ist hier ein Rad eines Schienenfahrzeugs. Das Rad weist mehrere Bohrungen 18 auf, welche aus den genannten Gründen die Ultraschallprüfung des Bauteils 7 in Teilbereichen erschweren, die von der Einkoppelfläche 9 aus gesehen jenseits der Bohrungen 18 liegen. Als Einkoppelfläche 9 dient hier eine zylindrische Mantelfläche 19 des Bauteils 7, nämlich die Lauffläche des Rads.

Ein Ultraschallprüfkopf 1 ist jeweils an einem ersten und an einem zweiten Einschallort 20, 21 angeordnet, wobei die von den beiden Ultraschallprüfköpfen 1 emittierbaren Schallwellen jeweils Vorzugsrichtungen 11 aufweisen, die von den jeweiligen Flächennormalen 12, die sich hier in radialer Richtung erstrecken, abweichen.

Ebenso können sich die beiden entgegengesetzten Ultraschallprüfköpfe 1 im Lateralschwenk (bzw. Lateralrekonstruktion) die Übergänge vom Radkranz in die Radscheibe prüfen.

Die von den Ultraschallprüfköpfen 1 emittierten Schallfelder 22 erstrecken sich somit schräg bezüglich der radialen Richtung, also in "quasiradialer" Richtung. Dabei überlagern sich die beiden im Wesentlichen kegelförmig ausgebildeten Schallkegel in einem zwischen den Ultraschallprüfköpfen 1 gelegenen Bereich, so dass das Rad mittels einer so genannten V-Durchschallung insbesondere im Bereich bis zur Radnabe geprüft wird.

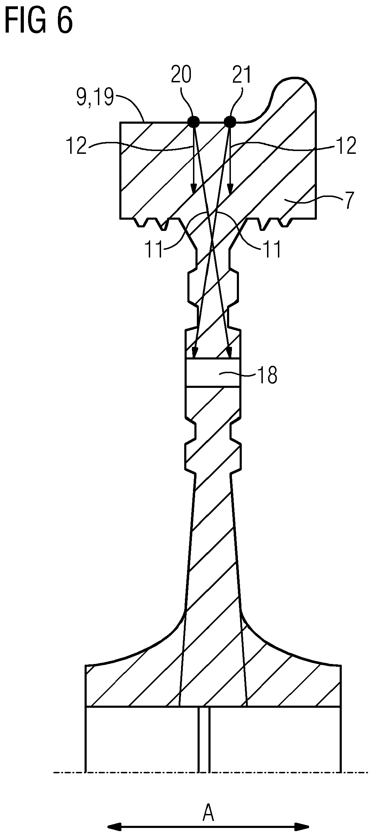

Figur 6 illustriert ein Verfahren zur Werkstoffprüfung des Bauteils 7 bzw. des Rads, bei dem die Einkopplung der Schallwellen über die als Lauffläche ausgebildete Mantelfläche 19 erfolgt. Die Einschallorte 20, 21 sind in dem hier gezeigten Beispiel bezüglich einer axialen Richtung A voneinander beabstandet, um eine V-Durchschallung mit einem anwendungsspezifischen schrägradialen und/oder schrägaxialen Schallverlauf in der gezeigten radialen Schnittebene zu bewirken. Auch hier verlaufen die Vorzugsrichtungen 11 der emittierten Schallwellen nicht parallel zu den Flächennormalen 12 der Einkoppelfläche 9.

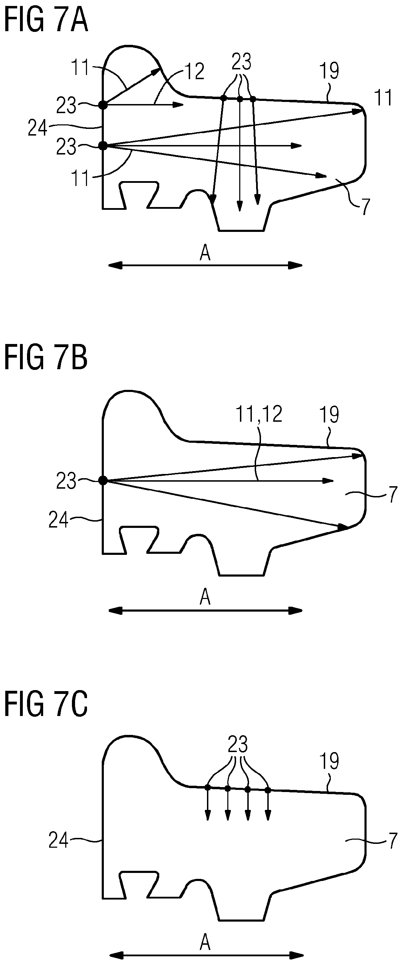

Figuren 7A bis 7C illustrieren beispielhaft weitere mögliche Varianten der Einkopplung von Schallwellen in das Bauteil 7. Dazu werden in den Figuren 7A bis 7C nicht näher dargestellte Ultraschallprüfköpfe 1 an weiteren Einschallorten 23 angestellt, um verschiedene Teilbereiche des Bauteil 7 bzw. des Werkstücks zu überprüfen.

Wie in Figur 7A schematisch dargestellt, ist vorgesehen, dass die Einkopplung der Schallwellen in das Bauteil 7 nicht ausschließlich in radialer Richtung über die zylindrische Mantelfläche 19 erfolgen muss. An einer senkrecht zur axialen Richtung A verlaufenden axialen Fläche 24 sind weitere Einschallorte 23 für Ultraschallprüfköpfe 1 vorgesehen, so dass Schallwellen in Vorzugsrichtungen 11 eingekoppelt werden, die von den dort in axialer Richtung A verlaufenden Flächennormalen 12 abweichen können. Dies entspricht somit einer axialen / axialradialen Einschallung in das Bauteil. Die Einschallorte 23 auf der Stirnfläche können vorteilhaft auch durch diese Technik in einen Ort zusammenfallen.

Figur 7B zeigt entsprechend eine axiale Einschallung, bei der die Vorzugsrichtung 11 der emittierten Schallwellen parallel zu der sich in axialer Richtung A erstreckenden Flächennormalen 12 verläuft.

Figur 7C illustriert nochmals eine mögliche Einschallung über die als Lauffläche ausgebildete Mantelfläche 18 des Rads.

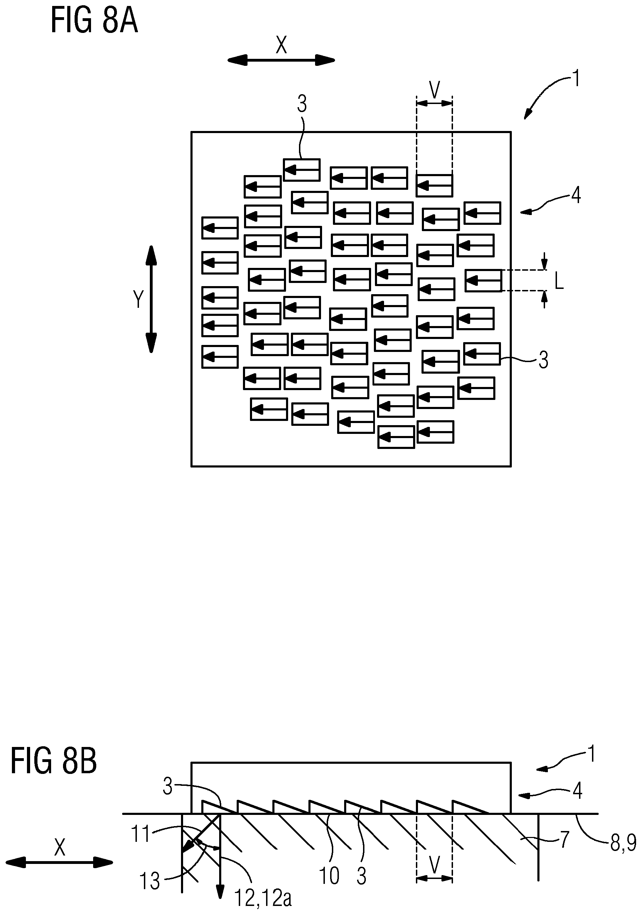

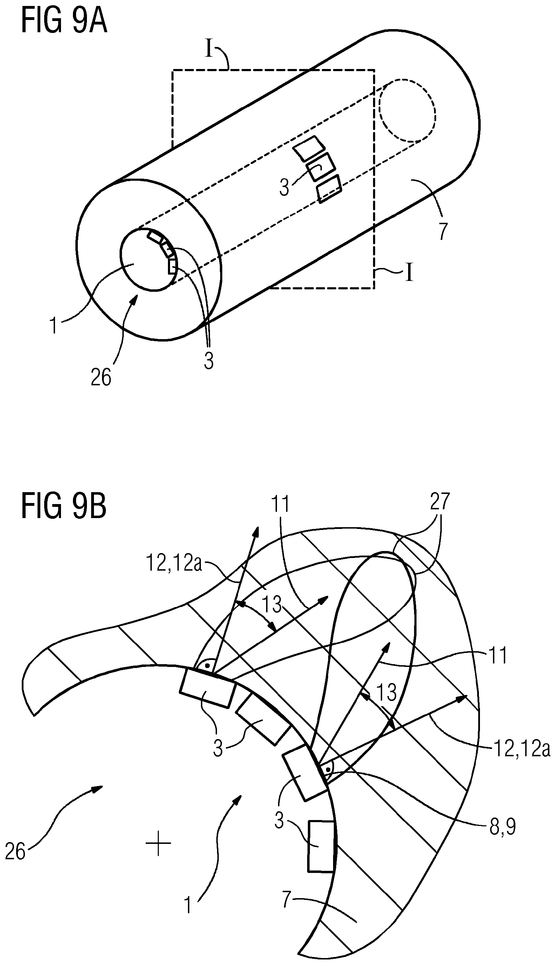

Figuren 8A, 8B, 9A, 9B zeigen weitere Ausführungsbeispiele des Ultraschallprüfkopfs 1, die insbesondere zur Ultraschallprüfung von Rädern von Schienenfahrzeugen bzw. zur Ultraschallprüfung von Achsen mit Einschallung von der Mantelfläche bzw. der Bohrung vorgesehen sind, so dass auf die diesbezüglichen Ausführungen verwiesen wird.

Figuren 8A und 8B zeigen einen Ultraschallprüfkopf 1 gemäß einem dritten Ausführungsbeispiel in einer Draufsicht und in einer Schnittdarstellung. Die Einzelwandler 3 sind, ähnlich wie die bereits in Figur 1 gezeigte Ausführung, stochastisch über die Fläche des Arrays 4 verteilt angeordnet. Entsprechend variiert der Abstand der jeweils im Array 4 nächstgelegenen Einzelwandlern 3 entsprechend einer stochastischen Verteilung.

Die Einzelwandler 3 des dritten Ausführungsbeispiels sind rechteckig ausgebildet und verlaufen bezüglich der Auflagefläche 8 im spitzen Winkel 13. Figur 8B zeigt, dass die längere Seite der rechteckigen Einzelwandler 3, im Folgenden als vertikale Ausdehnung V bezeichnet, gegenüber der Auflagefläche (8) im spitzen Winkel (13) verläuft. Die kürzere Seite der rechteckigen Einzelwandler, im Folgenden mit lateraler Ausdehnung L bezeichnet, verläuft parallel zur Auflagefläche 8. Der Verlauf der Schräge der Einzelwandler 3 ist in der Draufsicht der Figur 8A schematisch durch Pfeile dargestellt. Mit anderen Worten weist die vertikale Ausdehnung der Einzelwandler 3 einen größeren Betrag auf, als die laterale Ausdehnung L.

Im Übrigen entspricht das dritte Ausführungsbeispiel im Wesentlichen der in Figur 3 gezeigten Ausführungsform, so dass auf die bisherigen Erläuterungen verwiesen wird.

Figuren 9A und 9B zeigen ein viertes Ausführungsbeispiel des Ultraschallprüfkopfs 1, der insbesondere zur Prüfung eines zylindrischen Bauteils 7 oder eines zylindrischen Abschnitts des Bauteils 7 ausgebildet ist. Dazu hat der die Einzelwandler 3 umfassender Ultraschallprüfkopf 1 im Wesentlichen eine zylindrische Symmetrie, so dass dieser in ein Bohrloch 26 des Bauteils 7 einsetzbar ist.

Figur 9B zeigt die in der perspektivischen Darstellung der Figur 9A illustrierte Anordnung entlang einer Schnittebene I. Die Ausrichtung der Einzelwandler 3 weicht von einer herkömmlichen Anordnung tangential zur Einkoppel- bzw. Auflagefläche 9,8 ab. Entsprechend sind die Einzelwandler 3 bezüglich der Flächennormalen 12, 12a in unterschiedlichen spitzen Winkeln 13 derart angeordnet, dass sich die schematisch gezeigten Schallkegel 27 bei der Prüfung des Bauteils 7 auf vorteilhafte Weise überlappen.

Die zerstörungsfreie Werkstoffprüfung des Bauteils 7 mittels des Ultraschallprüfkopfs 1 des vierten Ausführungsbeispiels erfolgt somit vom Inneren des Bohrlochs 26. Im Übrigen entspricht die Prüfung im Wesentlichen dem bereits beschriebenen Verfahren, so dass auf die diesbezüglichen Ausführungen verwiesen wird.

Die Erfindung wurde vorstehend mit Bezug auf bevorzugte Ausführungsbeispiele beschrieben. Es versteht sich jedoch, dass die Erfindung nicht auf die konkrete Ausgestaltung der gezeigten Ausführungsbeispiele beschränkt ist, vielmehr kann der zuständige Fachmann anhand der Beschreibung Variationen ableiten, ohne von dem wesentlichen Grundgedanken der Erfindung abzuweichen.

**Bezugszeichenliste**

| | | | |
|---|---|---|---|
| 1 | Ultraschallprüfkopf | X | erste Achse |
| 2 | Ultraschallwandleranordnung | Y | zweite Achse |
| 3 | Einzelwandler | Z | dritte Achse |
| 4 | Array | A | axiale Richtung |
| 5 | zentraler Bereich | V | vertikale Ausdehnung |
| 6 | peripherer Bereich | L | laterale Ausdehnung |
| 7 | Bauteil | I | Schnittebene |
| 8 | Auflagefläche | | |
| 9 | Einkoppelfläche | | |
| 10 | Koppelelement | | |
| 11 | Vorzugsrichtung | | |
| 12 | Flächennormale | | |
| 12a | Flächennormale | | |
| 13 | spitzer Winkel | | |
| 14 | Prüfsystem | | |
| 15 | Steuereinheit | | |
| 16 | Speichereinheit | | |
| 17 | Auswerteeinheit | | |
| 18 | Bohrung | | |
| 19 | Mantelfläche | | |
| 20 | erster Einschallort | | |
| 21 | zweiter Einschallort | | |
| 22 | Schallfeld | | |
| 23 | weiterer Einschallort | | |
| 24 | axiale Fläche | | |
| 25 | Dämpfungselement | | |
| 26 | Bohrloch | | |

## Patentansprüche

1. Ultraschallprüfkopf (1) zur zerstörungsfreien Werkstoffprüfung eines Bauteils (7), mit einer zur Ankopplung an das Bauteil (7) ausgebildeten Ultraschallwandleranordnung (2), die eine Vielzahl von zueinander beabstandeten und in einem zweidimensionalen Array (4) angeordneten Einzelwandlern (3) umfasst, wobei zumindest einer der Einzelwandler (3) des Arrays (4) bezüglich einer Auflagefläche (8) des Arrays (4) in einem derart vorgebbaren spitzen Winkel (13) angeordnet ist, dass die von dem zumindest einen Einzelwandler (3) emittierbaren Schallwellen beim Aufsetzen des Ultraschallprüfkopfs (1) an das Bauteil (7) in einer Vorzugsrichtung (11) einkoppelbar sind, welche von einer senkrecht zur Auflagefläche (8) verlaufenden Flächennormalen (12) abweicht, **dadurch gekennzeichnet, dass** der zumindest eine Einzelwandler (3) eine laterale Ausdehnung (L) und eine senkrecht dazu verlaufende vertikale Ausdehnung (V) aufweist, wobei die laterale Ausdehnung (L) parallel zur Auflagefläche (8) verläuft und die vertikale Ausdehnung (V) gegenüber der Auflagefläche (8) im spitzen Winkel (13) verläuft, wobei die vertikale Ausdehnung (V) einen Betrag aufweist, der größer ist als ein Betrag der lateralen Ausdehnung (L).

2. Ultraschallprüfkopf nach Anspruch 1, **dadurch gekennzeichnet, dass** die Einzelwandler (3) derart ungleichmäßig über die Auflagefläche (8) des Arrays (4) verteilt angeordnet ist, dass ein Betrag eines Abstandes zwischen zueinander im Array (4) nächstgelegenen Einzelwandlern (3) variiert.

3. Ultraschallprüfkopf nach Anspruch 1 oder 2, **dadurch gekennzeichnet, dass** die Einzelwandler (3) im Array (4) entlang von Spirallinien angeordnet sind.

4. Ultraschallprüfkopf nach Anspruch 1 oder 2, **dadurch gekennzeichnet, dass** die Einzelwandler (3) über die Auflagefläche (8) des Arrays (4) stochastisch verteilt angeordnet sind.

5. Ultraschallprüfkopf nach einem der vorhergehenden Ansprüche 2 bis 4, **dadurch gekennzeichnet, dass** der Betrag des Abstandes von im Array (4) nächstgelegenen Einzelwandlern (3) in einem zentralen Bereich (5) des Arrays (4) im Mittel einen ersten Wert annimmt und der Betrag des Abstandes von im Array (4) nächstgelegenen Einzelwandlern (3) in einem peripheren, den zentralen Bereich (5) umgebenden Bereich (6) des Arrays (4) im Mittel einen zweiten Wert annimmt, wobei der erste Wert kleiner als der zweite Wert ist.

6. Ultraschallprüfkopf nach einem der vorhergehenden Ansprüche, **dadurch gekennzeichnet, dass** die Ausrichtung des zumindest einen Einzelwandlers (3) bezüglich der Auflagefläche (8) des Arrays (4) starr vorgegeben ist.

7. Ultraschallprüfkopf nach einem der vorhergehenden Ansprüche, **dadurch gekennzeichnet, dass** mehrere Einzelwandler (3) im Array (4) bezüglich der Auflagefläche (8) des Arrays (4) in vorgebbaren spitzen Winkeln (13) angeordnet sind.

8. Ultraschallprüfkopf nach Anspruch 7, **dadurch gekennzeichnet, dass** die spitzen Winkel (13) den gleichen Wert einnehmen.

9. Ultraschallprüfkopf nach einem der vorhergehenden Ansprüche, **dadurch gekennzeichnet, dass** ein von dem zumindest einen Einzelwandler (3) emittierbares Schallfeld bezüglich der Auflagefläche (8) in einem Einschallwinkel in das Bauteil (7) einkoppelbar ist, wobei der Einschallwinkel zwischen 0,1° und 84° beträgt.

10. Verfahren zur zerstörungsfreien Werkstoffprüfung eines Bauteils (7) unter Verwendung eines Ultraschallprüfkopfs (1) gemäß einem der vorhergehenden Ansprüche, **dadurch gekennzeichnet, dass** die Auflagefläche (8) des Ultraschallprüfkopfs (1) derart auf eine Einkoppelfläche (9) des Bauteils (7) aufgesetzt wird, dass die von dem zumindest einen Einzelwandler (3) emittierten Schallwellen in einer Vorzugsrichtung (11) eingekoppelt werden, welche von einer senkrecht zur Einkoppelfläche (9) verlaufenden weiteren Flächennormalen (12a) abweicht.

11. Verfahren nach Anspruch 10, **dadurch gekennzeichnet, dass** der Ultraschallprüfkopf (1) derart auf eine Mantelfläche (19) eines zylindrischen Abschnitts des Bauteils (7) aufgesetzt wird, dass die Vorzugsrichtung (11) der emittierten Schallwellen zwischen einer senkrecht zur Mantelfläche (19) verlaufenden radialen und einer parallel zur Mantelfläche (19) verlaufenden tangentialen Richtung verläuft.

12. Verfahren nach Anspruch 10 oder 11, **dadurch gekennzeichnet, dass** das Bauteil (7) ein Rad eines Schienenfahrzeugs ist.

13. Verfahren nach Anspruch 11 oder 12, **dadurch gekennzeichnet, dass** die Mantelfläche (19) eine innere Oberfläche eines hohlzylindrischen Abschnitts des Bauteils (7) ist.

14. Verfahren nach einem der Ansprüche 10 bis 13, **dadurch gekennzeichnet, dass** das Bauteil (7) anhand einer V-Durchschallung und/oder Tandemtechnik und/oder Wellenumwandlungstechnik geprüft wird.

## Claims

1. An ultrasonic test head (1) for the non-destructive materials testing of a component (7), with an ultrasonic transducer arrangement (2), which is designed to be coupled to the component (7), which arrangement comprises a multiplicity of individual transducers (3) arranged spaced apart from one another and in a two-dimensional array (4), wherein at least one of the individual transducers (3) of the array (4) is arranged at an acute angle (13) with respect to a bearing surface (8) of the array (4) which is pre-definable in such a manner that the sound waves which can be emitted by the at least one individual transducer (3) can be coupled in in a preferred direction (11), which deviates from a surface normal (12) running perpendicular to the bearing surface (8), when the ultrasonic test head (1) is placed onto the component (7), **characterized in that** the at least one individual transducer (3) has a lateral extent (L) and a vertical extent (V) running perpendicular thereto, wherein the lateral extent (L) runs parallel to the bearing surface (8) and the vertical extent (V) runs at an acute angle (13) with respect to the bearing surface (8), wherein the vertical extent (V) has a magnitude, which is greater than the magnitude of the lateral extent (L).

2. The ultrasonic test head according to claim 1, **characterized in that** the individual transducers (3) are distributed unevenly over the bearing surface (8) of the array (4) in such a manner that an amount of a distance between individual transducers (3) closest to one another in the array (4) varies.

3. The ultrasonic test head according to claim 1 or 2, **characterized in that** the individual transducers (3) in the array (4) are arranged along spiral lines.

4. The ultrasonic test head according to claim 1 or 2, **characterized in that** the individual transducers (3) are arranged distributed stochastically over the bearing surface (8) of the array (4).

5. The ultrasonic test head according to any one of the preceding claims 2 to 4, **characterized in that** the amount of the distance of individual transducers (3) closest in the array (4) assumes a first value on average in a central region (5) of the array (4), and the amount of the distance of individual transducers (3) closest in the array assumes a second value on average in a peripheral region (6) of the array (4) surrounding the central region (5), wherein the first value is smaller than the second value.

6. The ultrasonic test head according to any one of the preceding claims, **characterized in that** the alignment of the at least one individual transducer (3) with respect to the bearing surface (8) of the array (4) is rigidly pre-defined.

7. The ultrasonic test head according to any one of the preceding claims, **characterized in that** several individual transducers (3) in the array (4) are arranged with respect to the bearing surface (8) of the array (4) at pre-definable acute angles (13).

8. The ultrasonic test head according to claim 7, **characterized in that** the acute angles (13) assume the same value.

9. The ultrasonic test head according to any one of the preceding claims, **characterized in that** a sound field that can be emitted by the at least one individual transducer (3) can be coupled into the component (7) at an angle of incidence with respect to the bearing surface (8), wherein the angle of incidence is between 0.1° and 84°.

10. A method for the non-destructive materials testing of a component (7) using an ultrasonic test head (1) according to any one of the preceding claims, **characterized in that** the bearing surface (8) of the ultrasonic test head (1) is placed on a coupling surface (9) of the component (7), that the sound waves emitted by the at least one individual transducer (3) are coupled in a preferred direction (11), which deviates from a further surface normal (12a) running perpendicular to the coupling surface (9).

11. The method according to claim 10, **characterized in that** the ultrasonic test head (1) is placed on a lateral surface (19) of a cylindrical section of the component (7) in such a manner that the preferred direction (11) of the emitted sound waves runs between a radial direction running perpendicular to the lateral surface (19) and a tangential direction running parallel to the lateral surface (19).

12. The method according to claim 10 or 11, **characterized in that** the component (7) is a wheel of a rail vehicle.

13. The method according to claim 11 or 12, **characterized in that** the lateral surface (19) is an inner surface of a hollow-cylindrical section of the component (7).

14. The method according to any one of claims 10 to 13, **characterized in that** the component (7) is tested using a V-sound transmission and/or tandem technique and/or wave conversion technique.

## Revendications

1. Sonde à ultrasons (1) pour le contrôle non destructif du matériau d'un composant (7), avec un ensemble de transducteurs à ultrasons (2) conçu pour être couplé au composant (7), ledit ensemble comprenant une pluralité de transducteurs individuels (3) espacés entre eux et disposés dans un réseau bidimensionnel (4), dans laquelle au moins un des transducteurs individuels (3) du réseau (4) est disposé, par rapport à une surface d'appui (8) du réseau (4) avec un angle aigu (13) pouvant être prédéterminé, de façon à ce que les ondes sonores pouvant être émises par l'au moins un transducteur individuel (3) puissent être introduites, lors de la pose de la sonde à ultrasons (1) sur le composant (7), dans une direction préférentielle (11) qui est différente d'une normale à la surface (12) s'étendant perpendiculairement par rapport à la surface d'appui (8), **caractérisée en ce que** l'au moins un transducteur individuel (3) présente une extension latérale (L) et une extension verticale (V), perpendiculaire à celle-ci, dans lequel l'extension latérale (L) s'étend parallèlement à la surface d'appui (8) et l'extension verticale (V) s'étend avec un angle aigu (13) par rapport à la surface d'appui (8), dans lequel l'extension verticale (V) présente une valeur qui est supérieure à une valeur de l'extension latérale (L).

2. Sonde à ultrasons selon la revendication 1, **caractérisée en ce que** les transducteurs individuels (3) sont disposés de façon répartie irrégulièrement sur la surface d'appui (8) du réseau (4) de façon à ce qu'une valeur d'une distance des transducteurs individuels (3) les plus proches dans le réseau (4) soit variable.

3. Sonde à ultrasons selon la revendication 1 ou 2, **caractérisée en ce que** les transducteurs individuels (3) sont disposés dans le réseau (4) le long de lignes en spirale.

4. Sonde à ultrasons selon la revendication 1 ou 2, **caractérisée en ce que** les transducteurs individuels (3) sont disposés façon à être répartis de manière stochastique sur la surface d'appui (8) du réseau (4).

5. Sonde à ultrasons selon l'une des revendications précédentes 2 à 4, **caractérisée en ce que** la valeur de la distance des transducteurs individuels (3) les plus proches dans le réseau (4) prend, dans une zone centrale (5) du réseau (4), en moyenne, une première valeur et la valeur de la distance des transducteurs individuels (3) les plus proches dans le réseau (4) prend, dans une zone périphérique (6), entourant la zone centrale (5), du réseau (4), en moyenne, une deuxième valeur, dans lequel la première valeur est inférieure à la deuxième valeur.

6. Sonde à ultrasons selon l'une des revendications précédentes, **caractérisée en ce que** l'orientation de l'au moins un transducteur individuel (3) est prédéterminée de manière rigide par rapport à la surface d'appui (8) du réseau (4).

7. Sonde à ultrasons selon l'une des revendications précédentes, **caractérisée en ce que** plusieurs transducteurs individuels (3) sont disposés dans le réseau (4) avec un angle aigu (13) pouvant être prédéterminé par rapport à la surface d'appui (8) du réseau (4).

8. Sonde à ultrasons selon la revendication 7, **caractérisée en ce que** les angles aigus (13) prennent la même valeur.

9. Sonde à ultrasons selon l'une des revendications précédentes, **caractérisée en ce qu'**un champ sonore pouvant être émis par l'au moins un transducteur individuel (3) peut être introduit dans le composant (7) avec un angle d'incidence par rapport à la surface d'appui (8), dans lequel l'angle d'incidence est entre 0,1° et 84°.

10. Procédé de contrôle non destructif du matériau d'un composant (7) à l'aide d'une sonde à ultrasons (1) selon l'une des revendications précédentes, **caractérisé en ce que** la surface d'appui (8) de la sonde à ultrasons (1) est posée sur une surface d'entrée (9) du composant (7) de façon à ce que les ondes sonores émises par l'au moins un transducteur individuel (3) soient introduites dans une direction préférentielle (11) qui est différente d'une autre normale à la surface (12a) s'étendant perpendiculairement à la surface d'entrée (9).

11. Procédé selon la revendication 10, **caractérisé en ce que** la sonde à ultrasons (1) est posé sur une surface d'enveloppe (19) d'une portion cylindrique du composant (7), de façon à ce que la direction préférentielle (11) des ondes sonores émises s'étende entre une direction radiale s'étendant perpendiculairement à la surface d'enveloppe (19) et une direction tangentielle s'étendant parallèlement à la surface d'enveloppe (19).

12. Procédé selon la revendication 10 ou 11, **caractérisé en ce que** le composant (7) est une roue d'un véhicule ferroviaire.

13. Procédé selon la revendication 11 ou 12, **caractérisé en ce que** la surface d'enveloppe (19) est une surface interne d'une portion cylindrique creuse du composant (7).

14. Procédé selon l'une des revendications 10 à 13, **caractérisé en ce que** le composant (7) est contrôlé à l'aide d'un sondage acoustique en V ou d'une technique en tandem et/ou d'une technique de conversion d'ondes.
